# FASCICULE DE BREVET EUROPEEN

(11) **EP 3 942 690 B1**
(45) Date de publication et mention de la délivrance du brevet: **23.08.2023**
(21) Numéro de dépôt: 20711943.9
(22) Date de dépôt: 20.03.2020
(51) Int. Cl.: H02S 50/00

(54) **PROCÉDÉ DE DÉTERMINATION D'UN MASQUE SOLAIRE POUR UNE INSTALLATION ET PROCÉDÉ DE VÉRIFICATION DE COMPTABILITÉ D'UN DISPOSITIF D'ENTRAÎNEMENT MOTORISÉ**
VERFAHREN ZUR BESTIMMUNG EINER SOLARMASKE FÜR EINE ANLAGE UND VERFAHREN ZUR ÜBERPRÜFUNG DER KOMPATIBILITÄT EINER MOTORISIERTEN ANTRIEBSVORRICHTUNG
METHOD FOR DETERMINING A SOLAR MASK FOR AN INSTALLATION AND METHOD FOR CHECKING THE COMPATIBILITY OF A MOTORISED DRIVE DEVICE

(30) Priorité: 20.03.2019 FR 1902889
(43) Date de publication de la demande: 26.01.2022
(73) Titulaire: Somfy Activites SA, 74300 Cluses (FR)
(72) Inventeur: ROUSSEAU, Fabien, 74440 MIEUSSY (FR)
(74) Mandataire: Novaimo
(86) Numéro de dépôt international: PCT/EP2020/057747
(87) Numéro de publication internationale: WO 2020/188077

(56) Documents cités:
- EP-A2- 1 705 614
- WO-A1-2019/025389
- US-A1- 2009 257 650

## Description

La présente invention concerne un procédé de détermination d'un masque solaire pour une installation de fermeture, d'occultation ou de protection solaire.

La présente invention concerne également un procédé de vérification de compatibilité d'un dispositif d'entraînement motorisé pour une installation de fermeture, d'occultation ou de protection solaire en fonction du masque solaire déterminé par un tel procédé de détermination d'un masque solaire.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document WO 2019/025389 A1 qui décrit une installation comprenant un dispositif d'occultation et un dispositif d'entraînement motorisé. Le dispositif d'occultation comprend un écran. L'écran est configuré pour être déplacé entre une position ouverte et une position fermée au moyen du dispositif d'entraînement motorisé. Le dispositif d'entraînement motorisé comprend un actionneur électromécanique et un dispositif d'alimentation en énergie électrique autonome. Le dispositif d'alimentation en énergie électrique autonome comprend un panneau photovoltaïque et un dispositif de stockage d'énergie électrique. Le dispositif d'alimentation en énergie électrique autonome est configuré pour alimenter en énergie électrique l'actionneur électromécanique.

Ce document décrit également un procédé de détermination d'un masque solaire pour l'installation, ce procédé étant mis en oeuvre au moyen d'un terminal mobile. Le terminal mobile comprend un contrôleur, un appareil photographique et un dispositif de détection d'orientation. Le procédé comprend une étape de positionnement du terminal mobile à un emplacement prédéterminé du panneau photovoltaïque, dans une configuration assemblée de l'installation. Suite à l'étape de positionnement du terminal mobile, le procédé comprend une étape de prise d'une photographie au moyen de l'appareil photographique du terminal mobile. Le procédé comprend, en outre, une étape de détermination d'une orientation de l'appareil photographique du terminal mobile, lors de l'étape de prise de la photographie, au moyen du dispositif de détection d'orientation et du contrôleur du terminal mobile.

Cependant, dans le cas où une seule photographie est prise au moyen de l'appareil photographique du terminal mobile pour déterminer le masque solaire à l'emplacement prédéterminé du panneau photovoltaïque et étant donné que les angles de champ de l'appareil photographique du terminal mobile sont limités, il est nécessaire de prendre une hypothèse pour déterminer un environnement de ce qui est probablement présent comme obstacle au rayonnement solaire perçu par le panneau photovoltaïque autour de la photographie prise.

Dans le cas où une seule photographie est prise au moyen de l'appareil photographique du terminal mobile, la difficulté est de déterminer un rayonnement solaire pouvant être perçu par le panneau photovoltaïque à l'emplacement prédéterminé.

Une première hypothèse, dite pessimiste, est de considérer que tout ce qui est en dehors de la photographie prise est masqué et est considéré comme un obstacle au rayonnement solaire perçu par le panneau photovoltaïque à l'emplacement prédéterminé. Par conséquent, aucun apport énergétique solaire n'est fourni au panneau photovoltaïque à l'emplacement prédéterminé en dehors d'une zone de ciel déterminée appartenant à la photographie, suite à la prise de la photographie.

Une deuxième hypothèse, dite optimiste, est de considérer que tout ce qui est en dehors de la photographie prise est visible et est considéré comme une zone de ciel permettant le passage d'un rayonnement solaire perçu par le panneau photovoltaïque à l'emplacement prédéterminé. Par conséquent, un apport énergétique solaire est fourni au panneau photovoltaïque à l'emplacement prédéterminé par tout l'environnement en plus d'une zone de ciel déterminée appartenant à la photographie, suite à la prise de la photographie.

Par conséquent, ces première et deuxième hypothèses ne sont pas satisfaisantes.

La première hypothèse est trop sévère. Un résultat d'un diagnostic de vérification de compatibilité du dispositif d'entraînement motorisé pour l'installation serait souvent négatif.

Néanmoins, la deuxième hypothèse n'est pas assez sévère. Un résultat d'un diagnostic de vérification de compatibilité du dispositif d'entraînement motorisé pour l'installation serait souvent positif.

La présente invention a pour but de résoudre les inconvénients précités et de proposer un procédé de détermination d'un masque solaire pour une installation de fermeture, d'occultation ou de protection solaire, ainsi qu'un procédé de vérification de compatibilité d'un dispositif d'entraînement motorisé pour l'installation de fermeture, d'occultation ou de protection solaire, permettant d'augmenter virtuellement des angles de champ d'un appareil photographique d'un terminal mobile et d'aboutir à un diagnostic de vérification de compatibilité du dispositif d'entraînement motorisé pour l'installation réaliste.

A cet égard, la présente invention vise, selon un premier aspect, un procédé de détermination d'un masque solaire pour une installation de fermeture, d'occultation ou de protection solaire,
le procédé étant mis en oeuvre au moyen d'un terminal mobile,
le terminal mobile comprenant au moins :
   - un contrôleur,
   - un appareil photographique, et
   - un dispositif de détection d'orientation,
le procédé comprenant au moins les étapes suivantes :
   - positionnement du terminal mobile à un emplacement prédéterminé d'un panneau photovoltaïque d'un dispositif d'alimentation en énergie électrique autonome, le dispositif d'alimentation en énergie électrique autonome étant configuré pour alimenter en énergie électrique un actionneur électromécanique d'un dispositif d'entraînement motorisé, dans une configuration assemblée de l'installation,
   - suite à l'étape de positionnement du terminal mobile, prise d'une unique photographie au moyen de l'appareil photographique du terminal mobile, et
   - détermination d'une orientation de l'appareil photographique du terminal mobile, lors de l'étape de prise de la photographie, au moyen du dispositif de détection d'orientation et du contrôleur du terminal mobile.

Selon l'invention, le procédé comprend, en outre, au moins les étapes suivantes :
- prolongement d'au moins un contour de la photographie prise, lors de l'étape de prise, selon au moins une direction, au moyen du contrôleur du terminal mobile, et
- superposition de données de la photographie prolongée, lors de l'étape de prolongement, avec un diagramme de parcours solaires, dans un repère commun, de sorte à déterminer un masque solaire à l'emplacement prédéterminé du panneau photovoltaïque.

Ainsi, un tel procédé de détermination du masque solaire pour l'installation permet d'augmenter virtuellement des angles de champ de l'appareil photographique du terminal mobile par prolongement d'un ou plusieurs bords de la photographie prise.

De cette manière, le procédé permet de déterminer le masque solaire faisant face au panneau photovoltaïque du dispositif d'alimentation en énergie électrique autonome configuré pour alimenter en énergie électrique l'actionneur électromécanique du dispositif d'entraînement motorisé, en prenant une hypothèse réaliste sur un environnement du panneau photovoltaïque qui est en dehors de la photographie prise.

Par conséquent, la détermination du masque solaire faisant face au panneau photovoltaïque permet de mettre en oeuvre une estimation des apports énergétiques solaires sur le panneau photovoltaïque à l'emplacement prédéterminé, dans la configuration assemblée de l'installation.

En outre, le procédé de détermination du masque solaire pour l'installation est mis en oeuvre au moyen du terminal mobile et, en particulier, de l'appareil photographique et du dispositif de détection d'orientation du terminal mobile, de sorte à permettre l'estimation des apports énergétiques solaires sur le panneau photovoltaïque à l'emplacement prédéterminé, dans la configuration assemblée de l'installation.

Selon une caractéristique avantageuse de l'invention, l'étape de prolongement d'au moins un contour de la photographie prise, lors de l'étape de prise, est mise en oeuvre selon une pluralité de directions, au moyen du contrôleur du terminal mobile.

Selon une autre caractéristique avantageuse de l'invention, les directions de prolongement d'au moins un contour de la photographie prise, lors de l'étape de prise, sont le haut, la gauche et la droite de la photographie.

Selon une autre caractéristique avantageuse de l'invention, le procédé comprend une étape de projection de données de la photographie prolongée, lors de l'étape de prolongement, dans un repère de projection, en fonction d'au moins l'orientation déterminée de l'appareil photographique du terminal mobile, lors de l'étape de détermination de l'orientation, l'étape de projection étant mise en oeuvre suite à l'étape de prolongement et avant l'étape de superposition. En outre, l'étape de superposition est mise en oeuvre à partir de données de la photographie projetée, lors de l'étape de projection, sur le diagramme de parcours solaires.

Selon une autre caractéristique avantageuse de l'invention, le repère de projection de la photographie prolongée, lors l'étape de prolongement, est un repère sphérique de voute céleste.

Selon une autre caractéristique avantageuse de l'invention, l'étape de projection de la photographie prolongée, lors de l'étape de prolongement, est mise en oeuvre également en fonction d'une distance focale d'un objectif de l'appareil photographique du terminal mobile.

Selon une autre caractéristique avantageuse de l'invention, l'étape de projection de la photographie prolongée, lors de l'étape de prolongement, est mise en oeuvre également en fonction de dimensions d'un capteur d'image de l'appareil photographique du terminal mobile.

Selon une autre caractéristique avantageuse de l'invention, le procédé comprend, en outre, une étape de détermination d'au moins une zone de ciel à partir de la photographie prise, lors de l'étape de prise, par traitement d'image, au moyen du contrôleur du terminal mobile.

La présente invention vise, selon un deuxième aspect, un procédé de vérification de compatibilité d'un dispositif d'entraînement motorisé pour une installation de fermeture, d'occultation ou de protection solaire,
l'installation comprenant au moins :
   - un dispositif d'occultation, le dispositif d'occultation comprenant au moins un écran,
   - un dispositif d'entraînement motorisé, l'écran étant configuré pour être déplacé entre une position ouverte et une position fermée au moyen du dispositif d'entraînement motorisé, le dispositif d'entraînement motorisé comprenant au moins :
      -- un actionneur électromécanique, et
      -- un dispositif d'alimentation en énergie électrique autonome, le dispositif d'alimentation en énergie électrique autonome comprenant au moins un panneau photovoltaïque et au moins un dispositif de stockage d'énergie électrique, le dispositif d'alimentation en énergie électrique autonome étant configuré pour alimenter en énergie électrique l'actionneur électromécanique,
le procédé étant mis en oeuvre au moyen d'un terminal mobile,
le terminal mobile comprenant au moins :
   - un contrôleur,
   - un appareil photographique, et
   - un dispositif de détection d'orientation,
le procédé comprenant au moins les étapes suivantes :
   - sélection de l'actionneur électromécanique parmi une liste d'actionneurs électromécaniques ou entrée d'un identifiant de l'actionneur électromécanique,
   - sélection du panneau photovoltaïque parmi une liste de panneaux photovoltaïques ou entrée d'un identifiant du panneau photovoltaïque,
   - sélection du dispositif de stockage d'énergie électrique parmi une liste de dispositifs de stockage d'énergie électrique ou entrée d'un identifiant du dispositif de stockage d'énergie électrique, et
   - détermination d'une localisation géographique de l'installation.

Selon l'invention, le procédé comprend, en outre, au moins les étapes suivantes :
- détermination d'un masque solaire selon un procédé de détermination conforme à l'invention, tel que mentionné ci-dessus, et
- vérification de compatibilité du dispositif d'entraînement motorisé en fonction des résultats des étapes de sélection ou d'entrée de l'actionneur électromécanique, du panneau photovoltaïque et du dispositif de stockage d'énergie électrique, de détermination de la localisation géographique de l'installation et de détermination du masque solaire.

Ce procédé de vérification de compatibilité du dispositif d'entraînement motorisé présente des caractéristiques et avantages analogues à ceux décrits précédemment en relation avec le procédé de détermination du masque solaire pour l'installation de fermeture, d'occultation ou de protection solaire selon l'invention, tel que mentionné ci-dessus.

En outre, un tel procédé de vérification de compatibilité du dispositif d'entraînement motorisé permet de fournir un diagnostic concernant une possibilité ou non d'installer le dispositif d'entraînement motorisé équipé de l'actionneur électromécanique et du dispositif d'alimentation en énergie électrique autonome et, plus particulièrement, du panneau photovoltaïque à l'emplacement prédéterminé, dans la configuration assemblée de l'installation, suite à la détermination du masque solaire, conformément au procédé de détermination, tel que mentionné ci-dessus.

La présente invention vise, selon un troisième aspect, un terminal mobile comprenant des éléments matériels et/ou logiciels configurés pour mettre en oeuvre :
- un procédé de détermination d'un masque solaire pour une installation de fermeture, d'occultation ou de protection solaire conforme à l'invention, tel que mentionné ci-dessus, et/ou
- un procédé de vérification de compatibilité d'un dispositif d'entraînement motorisé pour une installation de fermeture, d'occultation ou de protection solaire conforme à l'invention, tel que mentionné ci-dessus.

D'autres particularités et avantages de l'invention apparaîtront encore dans la description ci-après.

Aux dessins annexés, donnés à titre d'exemples non limitatifs :
[Fig 1] la figure 1 est une vue schématique en coupe transversale d'une installation conforme à un mode de réalisation de l'invention ;
[Fig 2] la figure 2 est une vue schématique en perspective de l'installation illustrée à la figure 1 ;
[Fig 3] la figure 3 est une vue schématique en coupe axiale et partielle de l'installation illustrée aux figures 1 et 2, montrant un actionneur électromécanique de l'installation ;
[Fig 4] la figure 4 est un schéma blocs d'un algorithme d'un procédé conforme à l'invention, de détermination d'un masque solaire pour l'installation illustrée aux figures 1 à 3 ;
[Fig 5] la figure 5 est un exemple de résultat d'un traitement d'image d'une photographie prise au moyen d'un appareil photographique d'un terminal mobile selon le procédé de détermination illustré à la figure 4 ;
[Fig 6] la figure 6 est un exemple de résultat de prolongement des contours de la photographie prise au moyen d'un contrôleur du terminal mobile selon le procédé de détermination illustré à la figure 4 ;
[Fig 7] la figure 7 est un exemple de résultat d'une projection de données d'une photographie prolongée dans un repère de projection, en particulier un repère de voute céleste en coordonnées sphériques, au moyen d'un contrôleur du terminal mobile selon le procédé de détermination illustré à la figure 4 ;
[Fig 8] la figure 8 est un exemple de résultat d'une superposition de données d'une photographie projetée sur un diagramme de parcours solaires au moyen d'un contrôleur du terminal mobile selon le procédé de détermination illustré à la figure 4 ; et
[Fig 9] la figure 9 est un schéma blocs d'un algorithme d'un procédé conforme à l'invention, de vérification de compatibilité d'un dispositif d'entraînement motorisé pour l'installation illustrée aux figures 1 à 3.

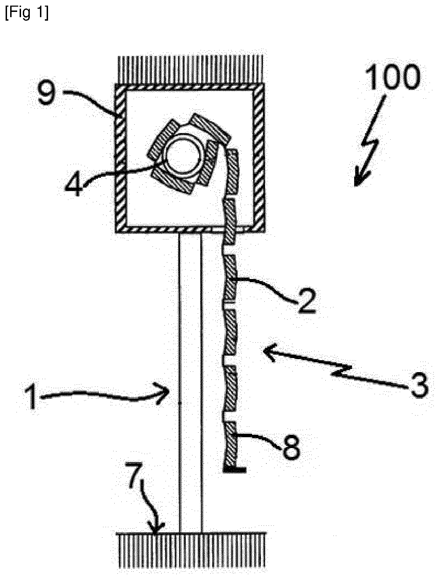

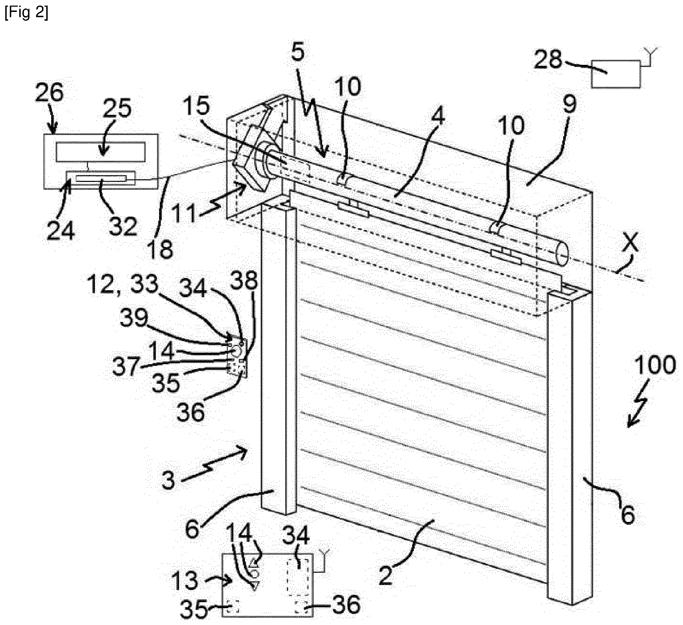

On décrit tout d'abord, en référence aux figures 1 et 2, une installation 100 de fermeture, d'occultation ou de protection solaire conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, un portail roulant, une grille, une porte ou encore un volet battant. La présente invention s'applique à tous les types de dispositif d'occultation.

Ici, l'installation 100 comprend le dispositif d'occultation 3.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5. L'écran 2 est mobile entre une position enroulée, en particulier haute, et une position déroulée, en particulier basse.

Ici, l'installation 100 comprend le dispositif d'entraînement motorisé 5.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à déplacer, en particulier dérouler ou enrouler, l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, entre une position ouverte, correspondant à la position enroulée et pouvant également être appelée position de fin de course haute FdcH, et une position fermée, correspondant à la position déroulée et pouvant également être appelée position de fin de course basse FdcB.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12.

L'unité de commande locale 12 peut être reliée par une liaison filaire ou non filaire avec une unité de commande centrale 13. L'unité de commande centrale 13 pilote l'unité de commande locale 12, ainsi que d'autres unités de commande locales similaires et réparties dans le bâtiment.

Le dispositif d'entraînement motorisé 5 est, de préférence, configuré pour exécuter les commandes de déplacement, notamment de déroulement ou d'enroulement, de l'écran 2 du dispositif d'occultation 3, pouvant être émises, notamment, par l'unité de commande locale 12 ou l'unité de commande centrale 13.

L'installation 100 comprend soit l'unité de commande locale 12, soit l'unité de commande centrale 13, soit l'unité de commande locale 12 et l'unité de commande centrale 13.

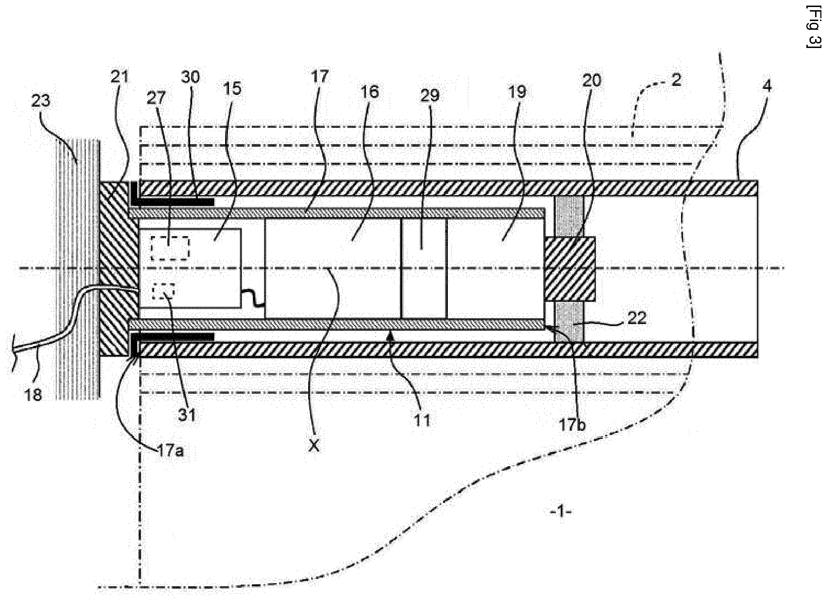

On décrit à présent, plus en détail et en référence à la figure 3, le dispositif d'entraînement motorisé 5, y compris l'actionneur électromécanique 11, appartenant à l'installation 100 des figures 1 et 2.

Avantageusement, l'actionneur électromécanique 11 comprend un moteur électrique 16. Le moteur électrique 16 comprend un rotor et un stator, non représentés et positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif d'occultation 3, sont constitués par au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

L'unité électronique de contrôle 15 comprend au moins un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Préférentiellement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

L'unité électronique de contrôle 15, l'unité de commande locale 12 et/ou l'unité de commande centrale 13 peuvent être en communication avec une station météorologique, non représentée, déportée à l'extérieur du bâtiment, incluant, notamment, un ou plusieurs capteurs pouvant être configurés pour déterminer, par exemple, une température, une luminosité ou encore une vitesse de vent.

L'unité électronique de contrôle 15, l'unité de commande locale 12 et/ou l'unité de commande centrale 13 peuvent également être en communication avec un serveur 28, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 ou centrale 13. L'unité de commande locale 12 ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

L'unité de commande locale 12 ou centrale 13 comprend au moins un deuxième module de communication 36.

Ainsi, le deuxième module de communication 36 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant d'une fenêtre ou d'une porte. Un point de commande nomade peut être une télécommande, un téléphone intelligent ou une tablette.

Avantageusement, l'unité de commande locale 12 ou centrale 13 comprend également un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur et/ou à un signal provenant d'une horloge de l'unité électronique de contrôle 15, en particulier du microcontrôleur 31. Le capteur et/ou l'horloge peuvent être intégrés à l'unité de commande locale 12 ou à l'unité de commande centrale 13.

Le dispositif d'entraînement motorisé 5 comprend un dispositif d'alimentation en énergie électrique autonome 26.

Le dispositif d'alimentation en énergie électrique autonome 26 comprend au moins un panneau photovoltaïque 25 et au moins un dispositif de stockage d'énergie électrique 24.

Le dispositif d'alimentation en énergie électrique autonome 26 est configuré pour alimenter en énergie électrique l'actionneur électromécanique 11.

Ainsi, le dispositif d'alimentation en énergie électrique autonome 26 permet d'alimenter en énergie électrique l'actionneur électromécanique 11, sans être lui-même relié électriquement à un réseau d'alimentation électrique du secteur.

Ici, le panneau photovoltaïque 25 est relié électriquement au dispositif de stockage d'énergie électrique 24.

L'actionneur électromécanique 11 est relié électriquement au dispositif d'alimentation en énergie électrique autonome 26 et, plus particulièrement, au dispositif de stockage d'énergie électrique 24. De préférence, l'actionneur électromécanique 11 est relié électriquement au dispositif d'alimentation en énergie électrique autonome 26 et, plus particulièrement, au dispositif de stockage d'énergie électrique 24 au moyen d'au moins un câble d'alimentation électrique 18, de sorte à permettre l'alimentation en énergie électrique de l'actionneur électromécanique 11 à partir du dispositif d'alimentation en énergie électrique autonome 26.

L'unité électronique de contrôle 15 est reliée électriquement au dispositif d'alimentation en énergie électrique autonome 26 et, plus particulièrement, au dispositif de stockage d'énergie électrique batterie 24.

Avantageusement, le dispositif de stockage d'énergie électrique 24 comprend au moins une batterie 32.

Avantageusement, la batterie 32 comprend au moins un élément de stockage d'énergie électrique, non représenté.

Ici, la batterie 32 comprend une pluralité d'éléments de stockage d'énergie électrique. Préférentiellement, les éléments de stockage d'énergie électrique sont reliés électriquement en série.

Le nombre d'éléments de stockage d'énergie électrique de la batterie n'est pas limitatif.

Avantageusement, le dispositif de stockage d'énergie électrique 24 est de type rechargeable et est configuré pour alimenter en énergie électrique l'actionneur électromécanique 11. En outre, le dispositif de stockage d'énergie électrique 24 est configuré pour être alimenté en énergie électrique par le panneau photovoltaïque 25.

Ainsi, le rechargement du dispositif de stockage d'énergie électrique 24 est mis en oeuvre par énergie solaire, au moyen du panneau photovoltaïque 25.

De cette manière, le dispositif de stockage d'énergie électrique 24 peut être rechargé sans avoir à démonter une partie du coffre 9 du dispositif d'occultation 3.

Le panneau photovoltaïque 25 comprend au moins une cellule photovoltaïque et, plus particulièrement, une pluralité de cellules photovoltaïques.

Le dispositif d'entraînement motorisé 5, en particulier le panneau photovoltaïque 25, comprend des éléments de chargement configurés pour charger la batterie 32 du dispositif de stockage d'énergie électrique 24 à partir de l'énergie solaire récupérée par le panneau photovoltaïque 25.

Ainsi, les éléments de chargement configurés pour charger la batterie 32 du dispositif de stockage d'énergie électrique 24 à partir de l'énergie solaire permettent de convertir l'énergie solaire récupérée par le panneau photovoltaïque 25 en énergie électrique.

En variante ou en complément, le dispositif d'entraînement motorisé 5, en particulier l'actionneur électromécanique 11, est alimenté en énergie électrique au moyen de la batterie 32 ou à partir d'un réseau d'alimentation électrique du secteur, en particulier par le réseau alternatif commercial, notamment en fonction d'un état de charge de la batterie 32.

Un carter 17 de l'actionneur électromécanique 11 est, préférentiellement, de forme cylindrique.

Dans un mode de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend également un réducteur 19, un frein 29 et un arbre de sortie 20.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs. Le nombre d'étages de réduction peut être supérieur ou égal à deux.

A titre d'exemple nullement limitatif, le frein 29 peut être un frein à ressort, un frein à came ou un frein électromagnétique.

L'actionneur électromécanique 11 peut également comprendre un dispositif de détection de fin de course et/ou d'obstacle, pouvant être mécanique ou électronique.

Avantageusement, le moteur électrique 16, le frein 29 et le réducteur 19 sont montés à l'intérieur du carter 17 de l'actionneur électromécanique 11.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne 30 insérée autour d'une première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend un support de couple 21. Le support de couple 21 est en saillie au niveau de la première extrémité 17a du carter 17 de l'actionneur électromécanique 11, en particulier l'extrémité 17a du carter 17 recevant la couronne 30. Le support de couple 21 de l'actionneur électromécanique 11 permet ainsi de fixer l'actionneur électromécanique 11 sur un bâti 23, en particulier à une joue du coffre 9.

En outre, le support de couple 21 de l'actionneur électromécanique 11 peut permettre d'obturer la première extrémité 17a du carter 17.

Par ailleurs, le support de couple 21 de l'actionneur électromécanique 11 peut permettre de supporter l'unité électronique de contrôle 15. L'unité électronique de contrôle 15 peut être alimentée en énergie électrique au moyen du câble d'alimentation électrique 18.

Ici, et tel qu'illustré à la figure 3, l'unité électronique de contrôle 15 est ainsi disposée, autrement dit intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le bâti 23 ou dans le support de couple 21.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison 22 relié au tube d'enroulement 4. L'élément de liaison 22 est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

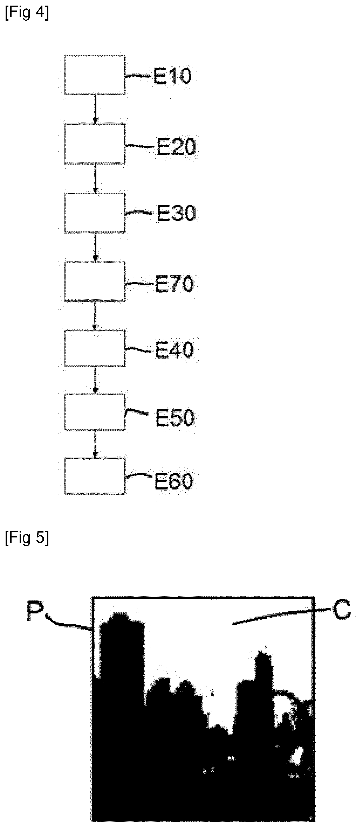

On décrit à présent, en référence aux figures 4 à 8, un mode d'exécution d'un procédé de détermination d'un masque solaire M pour l'installation 100 de fermeture, d'occultation ou de protection solaire conforme à l'invention et représentée aux figures 1 à 3.

Le masque solaire M est déterminé à partir d'un ou plusieurs obstacles disposés en vis-à-vis du panneau photovoltaïque 25 et pouvant provoquer une ombre sur celui-ci par rapport au soleil, dans la configuration assemblée de l'installation 100, à un instant donné, en particulier au cours d'une année. Ce ou ces obstacles peuvent être, par exemple, un bâtiment, pouvant être, notamment, une maison ou un immeuble, de la végétation, pouvant être, notamment, un arbuste ou un arbre, un relief du paysage autour de l'installation 100, pouvant être, notamment, une montagne. Ce ou ces obstacles définissant le masque solaire M peuvent réduire, voire stopper, une production d'énergie électrique par le panneau photovoltaïque 25 en fonction d'apports énergétiques provenant du soleil.

Le procédé est mis en oeuvre au moyen d'un terminal mobile 33.

Ici, le terminal mobile 33 peut être l'unité de commande locale 12 et comprendre tout ou partie des éléments constituant celle-ci.

Préférentiellement, le terminal mobile 33 est un téléphone intelligent, également appelé « Smartphone » en anglais.

En variante, le terminal mobile 33 peut être une tablette tactile ou un outil de configuration.

Le terminal mobile 33 peut ainsi être tout appareil mobile configuré pour mettre en oeuvre le procédé de détermination du masque solaire M pour l'installation 100.

Le terminal mobile 33 comprend au moins le contrôleur 35, un appareil photographique 37 et un dispositif de détection d'orientation 38.

Avantageusement, l'appareil photographique 37 du terminal mobile 33 est une caméra.

Avantageusement, l'appareil photographique 37 du terminal mobile 33 comprend un capteur d'image, non représenté.

Avantageusement, le capteur d'image de l'appareil photographique 37 du terminal mobile 33 est un capteur CCD (acronyme du terme anglo-saxon « Charged Couple Device »). En outre, le capteur d'image de l'appareil photographique 37 du terminal mobile 33 est configuré pour transformer des signaux lumineux en signaux électriques.

Avantageusement, le dispositif de détection d'orientation 38 du terminal mobile 33 comprend un gyroscope.

En variante, le dispositif de détection d'orientation 38 du terminal mobile 33 comprend un magnétomètre, pouvant être combiné avec un accéléromètre et/ou avec un gyroscope.

Avantageusement, le terminal mobile 33 comprend, en outre, un dispositif de positionnement par satellites 39.

Ici, le terminal mobile 33 comprend le deuxième module de communication 36, tel que décrit précédemment en référence à l'unité de commande locale 12, de même que les éléments de sélection 14 et d'affichage 34.

Avantageusement, le procédé est mis en oeuvre par une application du terminal mobile 33.

Le procédé comprend une étape E10 de positionnement du terminal mobile 33 à un emplacement prédéterminé du panneau photovoltaïque 25, dans une configuration assemblée de l'installation 100.

Ici, l'emplacement prédéterminé du panneau photovoltaïque 25 correspond à un emplacement où le panneau photovoltaïque 25 est à positionner dans l'installation 100 pour permettre une alimentation en énergie électrique du dispositif d'entraînement motorisé 5 et, plus particulièrement, de l'actionneur électromécanique 11.

Ainsi, l'étape E10 de positionnement du terminal mobile 33 consiste à placer le terminal mobile 33 à l'endroit où le panneau photovoltaïque 25 est souhaité être installé, dans la configuration assemblée de l'installation 100.

De cette manière, l'emplacement prédéterminé du panneau photovoltaïque 25 correspond à un emplacement à partir duquel le masque solaire M est à déterminer pour permettre une vérification de compatibilité du dispositif d'entraînement motorisé 5 en fonction des apports énergétiques solaires fournis au panneau photovoltaïque 25 à un instant donné et, plus particulièrement, au cours de l'année.

Suite à l'étape E10 de positionnement du terminal mobile 33, le procédé comprend une étape E20 de prise d'une photographie P au moyen de l'appareil photographique 37 du terminal mobile 33. Des données définissant cette photographie P, prise lors de l'étape E20, sont stockées dans une mémoire du contrôleur 35 du terminal mobile 33.

Le procédé comprend une étape E30 de détermination d'une orientation de l'appareil photographique 37 du terminal mobile 33, lors de l'étape E20 de prise de la photographie P, au moyen du dispositif de détection d'orientation 38 et du contrôleur 35 du terminal mobile 33.

Ainsi, l'étape E30 de détermination de l'orientation de l'appareil photographique 37 du terminal mobile 33 permet de déterminer une orientation de l'appareil photographique 37 du terminal mobile 33 par rapport à un repère cardinal R et, éventuellement, une inclinaison de l'appareil photographique 37 du terminal mobile 33 par rapport au sol et/ou une assiette de l'appareil photographique 37 du terminal mobile 33, c'est-à-dire une rotation par rapport à chacun des axes X, Y, Z d'un repère tridimensionnel.

De préférence, dans cette étape E30, le procédé peut également permettre de déterminer une localisation géographique du terminal mobile 33, lors de l'étape E20 de prise de la photographie P, au moyen d'un dispositif de localisation du terminal mobile 33, notamment au moyen du dispositif de positionnement par satellites 39. Cette localisation peut aussi être celle de l'installation 100.

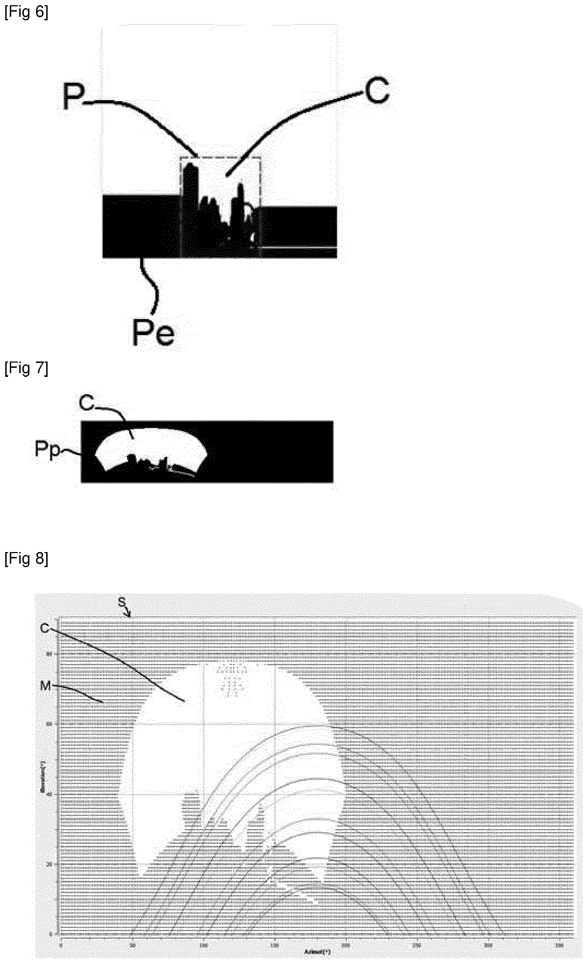

Le procédé comprend une étape E40 de prolongement des contours de la photographie P prise, lors de l'étape E20, selon au moins une direction, au moyen du contrôleur 35 du terminal mobile 33. Un exemple de résultat de prolongement des contours de la photographie P est illustré à la figure 6.

Ainsi, l'étape E40 de prolongement consiste à prolonger le résultat de l'étape E20 de prise de la photographie P, selon au moins une direction. On obtient alors une photographie prolongée Pe.

Ici, l'étape E40 de prolongement consiste à extrapoler des contours de la photographie P prise, lors de l'étape E20, selon au moins une direction, au moyen du contrôleur 35 du terminal mobile 33, en prenant une hypothèse qu'un environnement en dehors du champ de l'appareil photographique 37 du terminal mobile 33 est similaire aux contours de la photographie P.

Le procédé comprend, en outre, une étape E60 de superposition de données de la photographie prolongée Pe, lors de l'étape E40, avec un diagramme de parcours solaires S, dans un repère commun R, V, de sorte à déterminer un masque solaire M à l'emplacement prédéterminé du panneau photovoltaïque 25.

Le diagramme de parcours solaires S, également appelé diagramme solaire, est un diagramme indiquant, à différents instants de l'année, une hauteur angulaire, également appelée hauteur d'angle ou d'élévation, du soleil et un azimut de la direction du soleil pour une latitude donnée. Le diagramme de parcours solaires S permet ainsi de définir une trajectoire du soleil perçue à l'emplacement prédéterminé du panneau photovoltaïque 25 pour différents instants, au cours de l'année. De cette manière, le diagramme de parcours solaires S permet de définir des instants pendant lesquels un rayonnement solaire direct incident existe à l'emplacement prédéterminé du panneau photovoltaïque 25, en particulier dans des conditions météorologiques où le ciel est clair et en l'absence d'obstacles au rayonnement solaire.

Le diagramme de parcours solaires S illustré à la figure 8 est un exemple de représentation graphique pour une latitude et une longitude données. Chaque courbe représente une course apparente du soleil en fonction d'une heure pour une date déterminée de l'année.

Le masque solaire M, également appelé masque d'ombrage, est ainsi une représentation d'éléments projetant, selon la direction définie en abscisses et en ordonnées, une ombre à l'emplacement prédéterminé du panneau photovoltaïque 25, dans la configuration assemblée de l'installation 100.

Un tel procédé de détermination du masque solaire M pour l'installation 100 permet d'augmenter virtuellement des angles de champ de l'appareil photographique 37 du terminal mobile 33 par prolongement d'un ou plusieurs bords de la photographie P prise.

De cette manière, le procédé permet de déterminer le masque solaire M faisant face au panneau photovoltaïque 25 du dispositif d'alimentation en énergie électrique autonome 26 configuré pour alimenter en énergie électrique l'actionneur électromécanique 11 du dispositif d'entraînement motorisé 5, en prenant une hypothèse la plus plausible possible sur un environnement du panneau photovoltaïque 25 qui est en dehors de la photographie P prise, lors de l'étape E20.

Par conséquent, la détermination du masque solaire M faisant face au panneau photovoltaïque 25 permet de mettre en oeuvre une estimation des apports énergétiques solaires sur le panneau photovoltaïque 25 à l'emplacement prédéterminé, dans la configuration assemblée de l'installation 100.

En outre, le procédé de détermination du masque solaire M pour l'installation 100 est mis en oeuvre au moyen du terminal mobile 33 et, en particulier, de l'appareil photographique 37 et du dispositif de détection d'orientation 38 du terminal mobile 33, de sorte à permettre l'estimation des apports énergétiques solaires sur le panneau photovoltaïque 25 à l'emplacement prédéterminé, dans la configuration assemblée de l'installation 100.

Par ailleurs, la superposition des données de la photographie prolongée Pe, correspondant au résultat de l'étape E40 de prolongement de la photographie P prise, lors de l'étape E20, avec le diagramme de parcours solaires S, dans le repère commun R, V, permet de déterminer à chaque instant, en particulier au cours de l'année, si le soleil est visible ou non à l'emplacement prédéterminé du panneau photovoltaïque 25.

Ici, l'application du terminal mobile 33 permet de déterminer le masque solaire M pour l'installation 100.

Afin de mettre en oeuvre l'étape E60 de superposition, les données de la photographie prolongée Pe et les données du diagramme de parcours S sont exprimées dans le même repère, autrement dit dans le repère commun R, V.

Un tel repère commun peut être, notamment, un repère cardinal R, un repère tridimensionnel centré sur un point milieu du capteur d'image de l'appareil photographique 37 du terminal mobile 33, un repère tridimensionnel centré sur un point focal de l'objectif de l'appareil photographique 37 du terminal mobile 33 ou un repère sphérique de voute céleste, appelé par la suite également repère de projection V.

Ici, le procédé comprend une étape de détermination du diagramme de parcours solaires S, non représentée, en particulier en fonction d'un résultat de l'étape E30 de détermination de l'orientation de l'appareil photographique 37 du terminal mobile 33.

Avantageusement, le procédé comprend une étape E50 de projection de données de la photographie prolongée Pe, lors de l'étape E40, dans un repère de projection V, en fonction d'au moins l'orientation déterminée de l'appareil photographique 37 du terminal mobile 33, lors de l'étape E30. L'étape E50 de projection est mise en oeuvre suite à l'étape E40 de prolongement et avant l'étape E60 de superposition. Un exemple de résultat de la projection des données de la photographie prolongée Pe dans le repère de projection V est illustré à la figure 7.

Ainsi, l'étape E50 de projection des données de la photographie prolongée Pe consiste à projeter le résultat de l'étape E40 de prolongement des contours de la photographie P prise, lors de l'étape E20, par traitement d'image, dans le repère de projection V.

En outre, l'étape E50 de projection des données de la photographie prolongée Pe est mise en oeuvre en fonction de données déterminées par le dispositif de détection d'orientation 38 du terminal mobile 33 au moment de la prise de la photographie P, lors de l'étape E20, pouvant être des angles définissant, notamment, une précession, autrement dit un tangage, une nutation, autrement dit roulis et une rotation propre, autrement dit un lacet. De tels angles sont communément appelés les angles d'Euler.

Ici, l'étape E50 de projection correspond à une étape de changement de repère des données de la photographie prolongée Pe, notamment à partir du repère cardinal R vers le repère de projection V et, plus particulièrement, d'un repère tridimensionnel centré sur un point milieu du capteur d'image de l'appareil photographique 37 du terminal mobile 33 vers le repère de projection V.

Ici, le diagramme de parcours solaires S est déterminé dans le repère de projection V.

Avantageusement, le repère de projection V est un repère dans lequel sont représentées des coordonnées angulaires d'azimut et d'élévation. A la figure 7, l'azimut est représenté en abscisses et l'élévation est représentée en ordonnées.

Avantageusement, le repère de projection V de la photographie prolongée Pe, lors l'étape E40, est un repère sphérique de voute céleste.

Les angles, dits d'Euler, permettent d'exprimer en coordonnées sphériques, en particulier dans le repère de projection V, l'orientation d'un élément, en particulier de l'appareil photographique 37 du terminal mobile 33, par rapport à un repère cartésien, autrement dit un repère tridimensionnel, en particulier le repère cardinal R.

Ici, pour chaque direction à partir de l'emplacement prédéterminé du panneau photovoltaïque 25, dans le repère de projection V, un angle d'azimut est assimilé à un angle de rotation propre dans le repère cardinal R et un angle d'élévation est assimilé à un angle de précession dans le repère cardinal R.

Dans ce cas, l'étape E60 de superposition est mise en oeuvre à partir de données de la photographie projetée Pp, lors de l'étape E50, sur le diagramme de parcours solaires S. Ici, les données de la photographie projetée Pp sont obtenues à partir des données de la photographie prolongée Pe, lors de l'étape E40. Un exemple de résultat de la superposition des données de la photographie projetée Pp sur le diagramme de parcours solaires S est illustré à la figure 8.

Ainsi, la superposition des données de la photographie projetée Pp, correspondant au résultat de l'étape E50 de projection des données de la photographie prolongée Pe, sur le diagramme de parcours solaires S permet de déterminer à chaque instant, en particulier au cours de l'année, si le soleil est visible ou non à l'emplacement prédéterminé du panneau photovoltaïque 25.

L'étape E20 de prise de la photographie P consiste à prendre une unique photographie P.

Ainsi, le masque solaire M est déterminé au moyen d'une seule photographie prise, lors de l'étape E20.

De cette manière, un tel procédé de détermination du masque solaire M pour l'installation 100 permet de s'affranchir de la prise d'une pluralité de photographies contigües au moyen de l'appareil photographique 37 du terminal mobile 33.

En outre, un tel procédé de détermination du masque solaire M pour l'installation 100 permet de s'affranchir d'un objectif de type hypergone, également appelé « fisheye » en anglais, pour l'appareil photographique 37 du terminal mobile 33, de sorte à minimiser les coûts du terminal mobile 33 nécessaire pour mettre en oeuvre le procédé.

Par conséquent, le procédé est simplifié et, plus particulièrement, l'ergonomie de l'application du terminal mobile 33 est améliorée.

Avantageusement, l'étape E50 de projection des données de la photographie prolongée Pe, lors de l'étape E40, est mise en oeuvre également en fonction d'une distance focale d'un objectif de l'appareil photographique 37 du terminal mobile 33.

Avantageusement, l'étape E50 de projection des données de la photographie prolongée Pe, lors de l'étape E40, est mise en oeuvre également en fonction de dimensions du capteur d'image de l'appareil photographique 37 du terminal mobile 33, autrement dit des angles de champ horizontaux et verticaux de l'appareil photographique 37 du terminal mobile 33.

Dans un exemple de réalisation, l'étape E50 de projection des données de la photographie prolongée Pe, lors de l'étape E40, dans le repère de projection V comprend une première sous-étape de passage des données de la photographie prolongée Pe d'un premier repère tridimensionnel centré sur un point milieu du capteur d'image de l'appareil photographique 37 du terminal mobile 33 à un deuxième repère tridimensionnel centré sur un point focal de l'objectif de l'appareil photographique 37 du terminal mobile 33. Cette première sous-étape de l'étape E50 de projection nécessite préalablement une étape d'entrée et une étape de mémorisation par le contrôleur 35 du terminal mobile 33 de la distance focale de l'objectif de l'appareil photographique 37 du terminal mobile 33 et des dimensions du capteur d'image de l'appareil photographique 37 du terminal mobile 33. Cette première sous-étape de l'étape E50 de projection permet ainsi d'obtenir un résultat comprenant trois matrices, chacune exprimant une coordonnée de chaque pixel de la photographie prolongée Pe selon les axes X, Y, Z du deuxième repère tridimensionnel. En outre, l'étape E50 de projection des données de la photographie prolongée Pe, lors de l'étape E40, dans le repère de projection V comprend une deuxième sous-étape de passage du résultat de la première sous-étape de l'étape E50 de projection du deuxième repère tridimensionnel au repère de projection V centré sur le point focal de l'objectif de l'appareil photographique 37 du terminal mobile 33. Cette deuxième sous-étape de l'étape E50 de projection nécessite préalablement de déterminer chaque angle, dit d'Euler, lors de l'étape E30, par le dispositif de détection d'orientation 38 du terminal mobile 33 au moment de la prise de la photographie P, lors de l'étape E20, et d'appliquer au moyen du contrôleur 35 du terminal mobile 33 des matrices de rotation, dites d'Euler, pour chacun de ces angles. Cette deuxième sous-étape de l'étape E50 de projection permet ainsi d'obtenir un résultat comprenant deux matrices, chacune exprimant une coordonnée de chaque pixel de la photographie prolongée Pe selon les angles d'élévation et d'azimut du repère de projection V.

Avantageusement, l'étape E40 de prolongement des contours de la photographie P prise, lors de l'étape E20, est mise en oeuvre selon une pluralité de directions, au moyen du contrôleur 35 du terminal mobile 33.

Ainsi, l'étape E40 de prolongement permet de prendre une hypothèse réaliste sur un environnement du panneau photovoltaïque 25 qui est en dehors de la photographie P prise, lors de l'étape E20, bien que les angles de champ de l'appareil photographique 37 du terminal mobile 33 soient limités.

Avantageusement, les directions de prolongement des contours de la photographie P prise, lors de l'étape E20, sont le haut, la gauche et la droite de la photographie P.

Ainsi, l'étape E40 de prolongement permet de prendre une hypothèse réaliste sur un environnement du panneau photovoltaïque 25 qui est en dehors de la photographie P prise, lors de l'étape E20, dans des directions privilégiées excluant le bas de la photographie P, puisqu'aucune information n'est recherchée au niveau du sol.

Avantageusement, l'étape E20 de prise de la photographie P est mise en oeuvre en inclinant le terminal mobile 33 vers le haut par rapport au sol, de sorte que le bas du champ de l'objectif de l'appareil photographique 37 du terminal mobile 33 corresponde à l'horizon.

Ainsi, tout le champ vertical de l'objectif de l'appareil photographique 37 du terminal mobile 33 est utilisé au-dessus de l'horizon, lors de l'étape E20 de prise de la photographie P.

De cette manière, le prolongement des contours de la photographie P prise, lors de l'étape E20, vers le bas de la photographie P ne présente pas d'intérêt, puisqu'aucune information n'est recherchée au niveau du sol.

Avantageusement, l'étape E40 de prolongement des contours de la photographie P prise, lors de l'étape E20, est mise en oeuvre au moyen d'un logiciel embarqué par le contrôleur 35 du terminal mobile 33 et, plus particulièrement, d'une ou plusieurs librairies de traitement d'image.

Dans un exemple de réalisation, la photographie P prise, lors de l'étape E20, est découpée en lignes et en colonnes au moyen du contrôleur 35 du terminal mobile 33. Une hauteur des lignes et une largeur des colonnes sont prédéterminées par le contrôleur 35 du terminal mobile 33. Préférentiellement, la hauteur de chaque ligne est identique et la largeur de chaque colonne est identique. Par exemple, chaque ligne est une ligne de pixels. En outre, chaque colonne est une colonne de pixels. Pour prolonger le contour de la photographie P prise, lors de l'étape E20, vers le haut d'un nombre m de lignes, le contrôleur 35 du terminal mobile 33 copie une première ligne de pixels de la photographie P autant de fois que le nombre m de lignes puis insert ces lignes avant la première ligne. Pour prolonger le contour de la photographie P prise, lors de l'étape E20, vers la gauche d'un nombre n de colonnes, le contrôleur 35 du terminal mobile 33 copie une première colonne de pixels de la photographie P autant de fois que le nombre n de colonnes puis insert ces colonnes avant la première colonne. Pour prolonger le contour de la photographie P prise, lors de l'étape E20, vers la droite d'un nombre p de colonnes, le contrôleur 35 du terminal mobile 33 copie une dernière colonne de pixels de la photographie P autant de fois que le nombre p de colonnes puis insert ces colonnes après la dernière colonne. Alternativement, pour prolonger un ou plusieurs contours de la photographie P prise, lors de l'étape E20, le contrôleur 35 du terminal mobile 33 peut ne pas copier à l'identique plusieurs fois une dernière ligne ou colonne de pixels de la photographie P, mais tenir compte de l'évolution de la répartition des couleurs des pixels au voisinage du contour, notamment sur plusieurs lignes ou colonnes voisines de la dernière ligne ou colonne.

Le nombre m de lignes et les nombres n et p de colonnes peuvent être identiques ou différents.

Avantageusement, le procédé comprend une étape E70 de détermination d'au moins une zone de ciel C à partir de la photographie P prise, lors de l'étape E20, par traitement d'image, au moyen du contrôleur 35 du terminal mobile 33. Un exemple de résultat du traitement d'image de la photographie P est illustré à la figure 5.

Avantageusement, le traitement d'image de détermination de la ou les zones de ciel C, à partir de la photographie P prise, lors de l'étape E20, consiste à réaliser une segmentation binaire de la photographie P pour séparer la ou les zones de ciel C des autres éléments de la photographie P.

Dans un exemple de réalisation, une telle segmentation binaire de la photographie P consiste à évaluer une radiométrie, en particulier de type RGB (acronyme du terme anglo-saxon Red Green Blue), des pixels de la photographie P, de sorte à déterminer une luminosité de chaque pixel de la photographie P, et à déterminer pour chaque colonne de la photographie P des gradients de luminosité. Lorsque le gradient de luminosité est élevé et, en particulier, supérieur à un seuil prédéterminé, celui-ci peut correspondre à une frontière entre la zone de ciel C et un autre élément de la photographie P.

Avantageusement, l'étape E70 de détermination de la zone de ciel C est mise en oeuvre au moyen d'un logiciel embarqué par le contrôleur 35 du terminal mobile 33.

Avantageusement, la photographie P, prise lors de l'étape E20, peut être convertie en image noir et blanc. Par exemple, les pixels de l'image représentant la zone de ciel C sont transformés en pixels blancs et tous les autres pixels sont convertis en pixels noirs.

Avantageusement, l'étape E40 de prolongement est mise en oeuvre suite à l'étape E70 de détermination de la zone de ciel C.

Préférentiellement, l'étape E50 de projection des données de la photographie prolongée Pe, lors de l'étape E40, est mise en oeuvre en fonction de l'orientation déterminée de l'appareil photographique 37 du terminal mobile 33, lors de l'étape E30, de la distance focale de l'objectif de l'appareil photographique 37 du terminal mobile 33, des dimensions du capteur d'image de l'appareil photographique 37 du terminal mobile 33 et d'au moins un angle, dit d'Euler, déterminé par le dispositif de détection d'orientation 38 du terminal mobile 33 au moment de la prise de la photographie P, lors de l'étape E20. L'au moins un des angles, dits d'Euler, à prendre en considération est, notamment, l'au moins un des angles appelés rotation propre, précession et nutation et, préférentiellement, l'ensemble des angles, dits d'Euler.

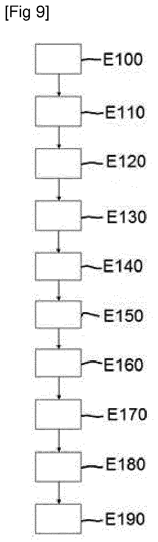

On décrit à présent, en référence à la figure 9, un mode d'exécution d'un procédé de vérification de compatibilité du dispositif d'entraînement motorisé 5 pour l'installation 100 de fermeture, d'occultation ou de protection solaire conforme à l'invention et représentée aux figures 1 à 3.

Le procédé de vérification de compatibilité du dispositif d'entraînement motorisé 5 pour l'installation 100 permet de vérifier si l'emplacement prédéterminé du panneau photovoltaïque 25 est situé à un endroit de l'installation 100 adapté pour que le panneau photovoltaïque 25 reçoive une quantité suffisante d'énergie solaire, au cours de l'année, de sorte à alimenter en énergie électrique le dispositif d'entraînement motorisé 5 et, plus particulièrement, l'actionneur électromécanique 11. Une telle vérification de compatibilité du dispositif d'entraînement motorisé 5 pour l'installation 100 vise à vérifier que le panneau photovoltaïque 25 est en mesure de fournir une quantité d'énergie électrique suffisante pour exécuter un nombre minimal d'ordres de commande reçus par le premier module de communication 27 de l'unité électronique de contrôle 15, chaque jour au cours de l'année.

Avantageusement, le procédé est mis en oeuvre par une application du terminal mobile 33, en particulier la même application du terminal mobile 33 mettant en oeuvre le procédé de détermination du masque solaire M pour l'installation 100.

Ici, l'application du terminal mobile 33 permet de vérifier la compatibilité du dispositif d'entraînement motorisé 5 pour l'installation 100.

Le procédé comprend une étape E100 de sélection de l'actionneur électromécanique 11 parmi une liste d'actionneurs électromécaniques ou d'entrée d'un identifiant de l'actionneur électromécanique 11.

Avantageusement, le procédé comprend une étape E110 d'enregistrement de l'actionneur électromécanique 11 sélectionné ou entré dans une mémoire du contrôleur 35 du terminal mobile 33.

Le procédé comprend une étape E120 de sélection du panneau photovoltaïque 25 parmi une liste de panneaux photovoltaïques ou d'entrée d'un identifiant du panneau photovoltaïque 25.

Avantageusement, le procédé comprend une étape E130 d'enregistrement du panneau photovoltaïque 25 sélectionné ou entré dans une mémoire du contrôleur 35 du terminal mobile 33.

Le procédé comprend une étape E140 de sélection du dispositif de stockage d'énergie électrique 24 parmi une liste de dispositifs de stockage d'énergie électrique 24 ou d'entrée d'un identifiant du dispositif de stockage d'énergie électrique 24.

Avantageusement, le procédé comprend une étape E150 d'enregistrement du dispositif de stockage d'énergie électrique 24 sélectionné ou entré dans une mémoire du contrôleur 35 du terminal mobile 33.

Avantageusement, chaque étape E100, E120, E140 de sélection ou d'entrée est mise en oeuvre au travers des éléments de sélection 14 et d'affichage 34 du terminal mobile 33 ou par lecture d'une étiquette optique, comme, par exemple, un code-barres ou un QR code, au moyen de l'appareil photographique 37 du terminal mobile 33, ou par réception d'une radio-étiquette, au moyen du deuxième module de communication 36 du terminal mobile 33, telle que, par exemple, une étiquette RFID (acronyme du terme anglo-saxon « Radio Frequency IDentification ») ou NFC (acronyme du terme anglo-saxon « Near Field Communication »).

Avantageusement, chaque liste est mémorisée dans une mémoire du contrôleur 35 du terminal mobile 33 ou dans une mémoire du serveur 28 configuré pour communiquer avec le terminal mobile 33.

Avantageusement, le procédé comprend une étape E160 d'entrée d'une ou plusieurs données relatives au dispositif d'occultation 3 et/ou à l'ouverture 1 et/ou à la fenêtre ou à la porte disposée à l'intérieur de l'ouverture 1. Ces données peuvent être, par exemple, des dimensions, des matières ou des coefficients de transmission d'énergie thermique.

Avantageusement, l'étape E160 d'entrée est mise en oeuvre au travers des éléments de sélection 14 et d'affichage 34 du terminal mobile 33.

Le procédé comprend, en outre, une étape E170 de détermination d'une localisation géographique de l'installation 100.

Avantageusement, l'étape E170 de détermination de la localisation géographique de l'installation 100 est mise en oeuvre au travers du dispositif de positionnement par satellites 39 du terminal mobile 33 et/ou des éléments de sélection 14 et d'affichage 34 du terminal mobile 33 et/ou de données transmises par le serveur 28 au deuxième module de communication 36 du terminal mobile 33.

Le procédé comprend une étape E180 de détermination du masque solaire M selon le procédé de détermination décrit précédemment.

Le procédé comprend, en outre, une étape E190 de vérification de compatibilité du dispositif d'entraînement motorisé 5 en fonction des résultats des étapes de sélection ou d'entrée E100, E120, E140, E160, de détermination E170 de la localisation géographique de l'installation 100 et de détermination E180 du masque solaire M.

Ainsi, le procédé de vérification de compatibilité du dispositif d'entraînement motorisé 5 permet de fournir un diagnostic concernant une possibilité ou non d'installer le dispositif d'entraînement motorisé 5 équipé de l'actionneur électromécanique 11 et du dispositif d'alimentation en énergie électrique autonome 26 et, plus particulièrement, du panneau photovoltaïque 25 à l'emplacement prédéterminé, dans la configuration assemblée de l'installation 100, suite à la détermination du masque solaire M, conformément au procédé de détermination, tel que mentionné ci-dessus. Par exemple, le diagnostic est positif s'il apparaît que le panneau photovoltaïque 25 implanté à l'emplacement prédéterminé sera exposé, au cours d'une période prédéterminée, à un rayonnement solaire direct pendant une durée supérieure à une valeur seuil de durée. En outre, le diagnostic est négatif dans le cas contraire.

Grâce à la présente invention, le procédé de détermination du masque solaire pour l'installation permet d'augmenter virtuellement des angles de champ de l'appareil photographique du terminal mobile par prolongement d'un ou plusieurs bords de la photographie prise.

De cette manière, le procédé permet de déterminer le masque solaire faisant face au panneau photovoltaïque du dispositif d'alimentation en énergie électrique autonome configuré pour alimenter en énergie électrique l'actionneur électromécanique du dispositif d'entraînement motorisé, en prenant une hypothèse réaliste sur un environnement du panneau photovoltaïque qui est en dehors de la photographie prise.

De nombreuses modifications peuvent être apportées aux exemples de réalisation décrits précédemment sans sortir du cadre de l'invention défini par les revendications.

En variante, non représentée, l'étape E60 de superposition peut être mise en oeuvre selon un processus différent. Dans un tel cas, le procédé comprend, préalablement à l'étape E60 de superposition, une étape de détermination du diagramme de parcours solaires S dans le repère sphérique de voute de céleste. Ensuite, l'étape E60 de superposition comprend une première sous-étape de passage de données du diagramme de parcours solaires S du repère sphérique de voute de céleste au repère tridimensionnel centré sur un point focal de l'objectif de l'appareil photographique 37 du terminal mobile 33, pouvant également être appelé première repère tridimensionnel. L'étape E60 de superposition comprend une deuxième sous-étape de passage du résultat de la première sous-étape de l'étape E60 de superposition au repère tridimensionnel centré sur un point milieu du capteur d'image de l'appareil photographique 37 du terminal mobile 33, pouvant également être appelé deuxième repère tridimensionnel. En outre, l'étape E60 de superposition comprend une troisième sous-étape de superposition des données de la photographie prolongée Pe, lors de l'étape E40, avec le diagramme de parcours solaires S déterminé préalablement, dans le repère tridimensionnel centré sur un point milieu du capteur d'image de l'appareil photographique 37 du terminal mobile 33, également appelé repère commun et pouvant être également le repère cardinal R. Cette deuxième sous-étape de l'étape E60 de superposition nécessite préalablement une étape d'entrée et une étape de mémorisation par le contrôleur 35 du terminal mobile 33 de la distance focale de l'objectif de l'appareil photographique 37 du terminal mobile 33 et des dimensions du capteur d'image de l'appareil photographique 37 du terminal mobile 33. Dans ce cas, l'étape E60 de superposition, en particulier les première et deuxième sous-étapes de l'étape E60 de superposition, sont mises en oeuvre en fonction de la distance focale d'un objectif de l'appareil photographique 37 du terminal mobile 33 et/ou des dimensions du capteur d'image de l'appareil photographique 37 du terminal mobile 33.

En variante, afin d'améliorer la détermination de la zone de ciel C, lors de l'étape E70, à partir de la photographie P prise, lors de l'étape E20, le procédé peut comprendre une étape d'optimisation d'au moins un paramètre de prise de la photographie P, lors de l'étape E20 et, plus particulièrement, de l'appareil photographique 37 du terminal mobile 33. Le ou les paramètres de prise de la photographie P peuvent être, par exemple, le contraste ou la balance des blancs de la photographie P. Une telle étape d'optimisation peut comprendre, par exemple, une première sous-étape de prise d'une photographie de test et une deuxième sous-étape de détermination d'au moins un paramètre optimum de prise de la photographie P à partir de la photographie de test. Cette étape d'optimisation est mise en oeuvre suite à l'étape E10 de positionnement et avant l'étape E20 de prise de la photographie P. Ainsi, la photographie P est prise, lors de l'étape E20, en appliquant le ou les paramètres optimums déterminés los de l'étape d'optimisation.

En variante, afin d'améliorer la détermination de la zone de ciel C, lors de l'étape E70, à partir de la photographie P prise, lors de l'étape E20, le procédé peut comprendre une étape de positionnement d'un curseur sur l'élément d'affichage 34 du terminal mobile 33, en particulier un écran tactile du terminal mobile 33, au niveau d'une zone de ciel C visible sur la photographie P, par l'intermédiaire de l'un des éléments de sélection 14 du terminal mobile 33.

Par ailleurs, le procédé de vérification de compatibilité peut comprendre, en outre, une étape de détermination de données météorologiques, de sorte à estimer un rayonnement solaire au niveau de l'emplacement prédéterminé du panneau photovoltaïque 25.

Avantageusement, les données météorologiques peuvent être déterminées au moyen d'une communication du deuxième module de communication 36 du terminal mobile 33 avec le serveur 28. Ces données météorologiques peuvent être mémorisées dans une mémoire du contrôleur 35 du terminal mobile 33 ou du serveur 28.

Avantageusement, de telles données météorologiques constituent un historique au niveau de l'emplacement prédéterminé du panneau photovoltaïque 25, en particulier en termes de rayonnement solaire et de température, de sorte à vérifier la compatibilité du dispositif d'entraînement motorisé 5 pour l'installation 100.

En outre, les modes de réalisation et variantes envisagés peuvent être combinés pour générer de nouveaux modes de réalisation de l'invention, sans sortir du cadre de l'invention défini par les revendications.

Dans la description qui précède, les figures 5 à 8 sont des illustrations explicatives des traitements numériques réalisés. Des traitements numériques complémentaires ou alternatifs peuvent être mis en oeuvre. Les procédés objets de l'invention peuvent ne mettre en oeuvre à aucun moment un affichage de l'une, de certaines ou de l'ensemble de ces illustrations.

## Revendications

1. Procédé de détermination d'un masque solaire (M) pour une installation de fermeture, d'occultation ou de protection solaire (100),
le procédé étant mis en oeuvre au moyen d'un terminal mobile (33),
le terminal mobile (33) comprenant au moins :
- un contrôleur (35),
- un appareil photographique (37), et
- un dispositif de détection d'orientation (38),
le procédé comprenant au moins les étapes suivantes :
- (E10) positionnement du terminal mobile (33) à un emplacement prédéterminé d'un panneau photovoltaïque (25) d'un dispositif d'alimentation en énergie électrique autonome (26), le dispositif d'alimentation en énergie électrique autonome (26) étant configuré pour alimenter en énergie électrique un actionneur électromécanique (11) d'un dispositif d'entraînement motorisé (5), dans une configuration assemblée de l'installation (100),
- suite à l'étape (E10) de positionnement du terminal mobile (33), (E20) prise d'une unique photographie (P) au moyen de l'appareil photographique (37) du terminal mobile (33), et
- (E30) détermination d'une orientation de l'appareil photographique (37) du terminal mobile (33), lors de l'étape (E20) de prise de la photographie (P), au moyen du dispositif de détection d'orientation (38) et du contrôleur (35) du terminal mobile (33),
**caractérisé en ce que** le procédé comprend, en outre, au moins les étapes suivantes :
- (E40) prolongement d'au moins un contour de la photographie (P) prise, lors de l'étape (E20) de prise, selon au moins une direction, au moyen du contrôleur (35) du terminal mobile (33), et
- (E60) superposition de données de la photographie prolongée (Pe), lors de l'étape (E40) de prolongement, avec un diagramme de parcours solaires (S), dans un repère commun (R, V), de sorte à déterminer un masque solaire (M) à l'emplacement prédéterminé du panneau photovoltaïque (25).

2. Procédé de détermination d'un masque solaire (M) pour une installation de fermeture, d'occultation ou de protection solaire (100) selon la revendication 1, **caractérisé en ce que** l'étape (E40) de prolongement d'au moins un contour de la photographie (P) prise, lors de l'étape (E20) de prise, est mise en oeuvre selon une pluralité de directions, au moyen du contrôleur (35) du terminal mobile (33).

3. Procédé de détermination d'un masque solaire (M) pour une installation de fermeture, d'occultation ou de protection solaire (100) selon la revendication 2, **caractérisé en ce que** les directions de prolongement d'au moins un contour de la photographie (P) prise, lors de l'étape (E20) de prise, sont le haut, la gauche et la droite de la photographie (P).

4. Procédé de détermination d'un masque solaire (M) pour une installation de fermeture, d'occultation ou de protection solaire (100) selon l'une quelconque des revendications 1 à 3, **caractérisé en ce que** le procédé comprend une étape (E50) de projection de données de la photographie prolongée (Pe), lors de l'étape (E40) de prolongement, dans un repère de projection (V), en fonction d'au moins l'orientation déterminée de l'appareil photographique (37) du terminal mobile (33), lors de l'étape de détermination (E30), l'étape (E50) de projection étant mise en oeuvre suite à l'étape (E40) de prolongement et avant l'étape (E60) de superposition, et **en ce que** l'étape (E60) de superposition est mise en oeuvre à partir de données de la photographie projetée (Pp), lors de l'étape (E50) de projection, sur le diagramme de parcours solaires (S).

5. Procédé de détermination d'un masque solaire (M) pour une installation de fermeture, d'occultation ou de protection solaire (100) selon la revendication 4, **caractérisé en ce que** le repère de projection (V) de la photographie prolongée (Pe), lors l'étape (E40) de prolongement, est un repère sphérique de voute céleste.

6. Procédé de détermination d'un masque solaire (M) pour une installation de fermeture, d'occultation ou de protection solaire (100) selon la revendication 4 ou selon la revendication 5, **caractérisé en ce que** l'étape (E50) de projection des données de la photographie prolongée (Pe), lors de l'étape (E40) de prolongement, est mise en oeuvre également en fonction d'une distance focale d'un objectif de l'appareil photographique (37) du terminal mobile (33).

7. Procédé de détermination d'un masque solaire (M) pour une installation de fermeture, d'occultation ou de protection solaire (100) selon l'une quelconque des revendications 4 à 6, **caractérisé en ce que** l'étape (E50) de projection des données de la photographie prolongée (Pe), lors de l'étape (E40) de prolongement, est mise en oeuvre également en fonction de dimensions d'un capteur d'image de l'appareil photographique (37) du terminal mobile (33).

8. Procédé de détermination d'un masque solaire (M) pour une installation de fermeture, d'occultation ou de protection solaire (100) selon l'une quelconque des revendications 1 à 7, **caractérisé en ce que** le procédé comprend, en outre, une étape (E70) de détermination d'au moins une zone de ciel (C) à partir de la photographie (P) prise, lors de l'étape (E20) de prise, par traitement d'image, au moyen du contrôleur (35) du terminal mobile (33).

9. Procédé de vérification de compatibilité d'un dispositif d'entraînement motorisé (5) pour une installation de fermeture, d'occultation ou de protection solaire (100),
l'installation (100) comprenant au moins :
- un dispositif d'occultation (3), le dispositif d'occultation (3) comprenant au moins un écran (2),
- un dispositif d'entraînement motorisé (5), l'écran (2) étant configuré pour être déplacé entre une position ouverte (FdCH) et une position fermée (FdCB) au moyen du dispositif d'entraînement motorisé (5), le dispositif d'entraînement motorisé (5) comprenant au moins :
-- un actionneur électromécanique (11), et
-- un dispositif d'alimentation en énergie électrique autonome (26), le dispositif d'alimentation en énergie électrique autonome (26) comprenant au moins un panneau photovoltaïque (25) et au moins un dispositif de stockage d'énergie électrique (24), le dispositif d'alimentation en énergie électrique autonome (26) étant configuré pour alimenter en énergie électrique l'actionneur électromécanique (11),
le procédé étant mis en oeuvre au moyen d'un terminal mobile (33),
le terminal mobile (33) comprenant au moins :
- un contrôleur (35),
- un appareil photographique (37), et
- un dispositif de détection d'orientation (38),
le procédé comprenant au moins les étapes suivantes :
- (E100) sélection de l'actionneur électromécanique (11) parmi une liste d'actionneurs électromécaniques ou entrée d'un identifiant de l'actionneur électromécanique (11),
- (E120) sélection du panneau photovoltaïque (25) parmi une liste de panneaux photovoltaïques ou entrée d'un identifiant du panneau photovoltaïque (25),
- (E140) sélection du dispositif de stockage d'énergie électrique (24) parmi une liste de dispositifs de stockage d'énergie électrique ou entrée d'un identifiant du dispositif de stockage d'énergie électrique (24), et
- (E170) détermination d'une localisation géographique de l'installation (100),
**caractérisé en ce que** le procédé comprend, en outre, au moins les étapes suivantes :
- (E180) détermination d'un masque solaire (M) selon un procédé de détermination conforme à l'une quelconque des revendications 1 à 8, et
- (E190) vérification de compatibilité du dispositif d'entraînement motorisé (5) en fonction des résultats des étapes de sélection ou d'entrée (E100, E120, E140) de l'actionneur électromécanique (11), du panneau photovoltaïque (25) et du dispositif de stockage d'énergie électrique (24), de détermination (E170) de la localisation géographique de l'installation (100) et de détermination (E180) du masque solaire (M).

10. Terminal mobile (33) comprenant un contrôleur (35), un appareil photographique (37), et un dispositif de détection d'orientation (38), **caractérisé en ce qu'**il est configuré pour mettre en oeuvre un procédé de détermination d'un masque solaire (M) pour une installation de fermeture, d'occultation ou de protection solaire (100) selon l'une quelconque des revendications 1 à 8 et/ou un procédé de vérification de compatibilité d'un dispositif d'entraînement motorisé (5) pour une installation de fermeture, d'occultation ou de protection solaire (100) selon la revendication 9.

## Patentansprüche

1. Verfahren zur Bestimmung einer Solarmaske (M) für eine Schließ-, Verdunkelungs- oder Sonnenschutzanlage (100),
wobei das Verfahren mittels eines mobilen Endgeräts (33) durchgeführt wird,
wobei das mobile Endgerät (33) mindestens enthält:
- ein Steuergerät (35),
- einen Fotoapparat (37), und
- eine Ausrichtungserkennungsvorrichtung (38),
wobei das Verfahren mindestens die folgenden Schritte enthält:
- (E10) Positionierung des mobilen Endgeräts (33) an einer vorbestimmten Stelle eines Solarpaneels (25) einer autonomen elektrischen Energieversorgungsvorrichtung (26), wobei die autonome elektrische Energieversorgungsvorrichtung (26) konfiguriert ist, einen elektromechanischen Stellantrieb (11) einer motorisierten Antriebsvorrichtung (5) in einer zusammengebauten Konfiguration der Anlage (100) mit elektrischer Energie zu versorgen,
- nach dem Schritt (E10) der Positionierung des mobilen Endgeräts (33), (E20) Aufnahme eines einzigen Fotos (P) mittels des Fotoapparats (37) des mobilen Endgeräts (33), und
- (E30) Bestimmung einer Ausrichtung des Fotoapparats (37) des mobilen Endgeräts (33) im Schritt (E20) der Aufnahme des Fotos (P) mittels der Ausrichtungserkennungsvorrichtung (38) und des Steuergeräts (35) des mobilen Endgeräts (33),
**dadurch gekennzeichnet, dass** das Verfahren außerdem mindestens die folgenden Schritte enthält:
- (E40) Verlängerung mindestens eines Umrisses des im Aufnahmeschritt (E20) aufgenommenen Fotos (P) gemäß mindestens einer Richtung mittels des Steuergeräts (35) des mobilen Endgeräts (33), und
- (E60) Überlagerung von Daten des im Verlängerungsschritt (E40) verlängerten Fotos (Pe) mit einem Diagramm von Sonnenverläufen (S) in einem gemeinsamen Bezugssystem (R, V), um eine Solarmaske (M) an der vorbestimmten Stelle des Solarpaneels (25) zu bestimmen.

2. Verfahren zur Bestimmung einer Solarmaske (M) für eine Schließ-, Verdunkelungs- oder Sonnenschutzanlage (100) nach Anspruch 1, **dadurch gekennzeichnet, dass** der Schritt (E40) der Verlängerung mindestens eines Umrisses des im Aufnahmeschritt (E20) aufgenommenen Fotos (P) gemäß einer Vielzahl von Richtungen mittels des Steuergeräts (35) des mobilen Endgeräts (33) durchgeführt wird.

3. Verfahren zur Bestimmung einer Solarmaske (M) für eine Schließ-, Verdunkelungs- oder Sonnenschutzanlage (100) nach Anspruch 2, **dadurch gekennzeichnet, dass** die Verlängerungsrichtungen mindestens eines Umrisses des im Aufnahmeschritt (E20) aufgenommenen Fotos (P) nach oben, links und rechts des Fotos (P) sind.

4. Verfahren zur Bestimmung einer Solarmaske (M) für eine Schließ-, Verdunkelungs- oder Sonnenschutzanlage (100) nach einem der Ansprüche 1 bis 3, **dadurch gekennzeichnet, dass** das Verfahren einen Schritt (E50) der Projektion von Daten des im Verlängerungsschritt (E40) verlängerten Fotos (Pe) in ein Projektionsbezugssystem (V) abhängig von mindestens der im Bestimmungsschritt (E30) bestimmten Ausrichtung des Fotoapparats (37) des mobilen Endgeräts (33) enthält, wobei der Projektionsschritt (E50) nach dem Verlängerungsschritt (E40) und vor dem Überlagerungsschritt (E60) durchgeführt wird, und dass der Überlagerungsschritt (E60) ausgehend von Daten des im Projektionsschritt (E50) auf das Diagramm von Sonnenverläufen (S) projizierten Fotos (Pp) durchgeführt wird.

5. Verfahren zur Bestimmung einer Solarmaske (M) für eine Schließ-, Verdunkelungs- oder Sonnenschutzanlage (100) nach Anspruch 4, **dadurch gekennzeichnet, dass** das Projektionsbezugssystem (V) des im Verlängerungsschritt (E40) verlängerten Fotos (Pe) ein sphärisches Bezugssystem des Himmelsgewölbes ist.

6. Verfahren zur Bestimmung einer Solarmaske (M) für eine Schließ-, Verdunkelungs- oder Sonnenschutzanlage (100) nach Anspruch 4 oder nach Anspruch 5, **dadurch gekennzeichnet, dass** der Schritt (E50) der Projektion der Daten des im Verlängerungsschritt (E40) verlängerten Fotos (Pe) ebenfalls abhängig von einer Brennweite eines Objektivs des Fotoapparats (37) des mobilen Endgeräts (33) durchgeführt wird.

7. Verfahren zur Bestimmung einer Solarmaske (M) für eine Schließ-, Verdunkelungs- oder Sonnenschutzanlage (100) nach einem der Ansprüche 4 bis 6, **dadurch gekennzeichnet, dass** der Schritt (E50) der Projektion der Daten des im Verlängerungsschritt (E40) verlängerten Fotos (Pe) ebenfalls abhängig von Abmessungen eines Bildsensors des Fotoapparats (37) des mobilen Endgeräts (33) durchgeführt wird.

8. Verfahren zur Bestimmung einer Solarmaske (M) für eine Schließ-, Verdunkelungs- oder Sonnenschutzanlage (100) nach einem der Ansprüche 1 bis 7, **dadurch gekennzeichnet, dass** das Verfahren außerdem einen Schritt (E70) der Bestimmung mindestens einer Himmelszone (C) ausgehend von dem im Aufnahmeschritt (E20) aufgenommenen Foto (P) durch Bildverarbeitung mittels des Steuergeräts (35) des mobilen Endgeräts (33) enthält.

9. Verfahren zur Kompatibilitätsprüfung einer motorisierten Antriebsvorrichtung (5) für eine Schließ-, Verdunkelungs- oder Sonnenschutzanlage (100), wobei die Anlage (100) mindestens enthält:
- eine Verdunkelungsvorrichtung (3), wobei die Verdunkelungsvorrichtung (3) mindestens eine Blende (2) enthält,
- eine motorisierte Antriebsvorrichtung (5), wobei die Blende (2) konfiguriert ist, mittels der motorisierten Antriebsvorrichtung (5) zwischen einer offenen Stellung (FdCH) und einer geschlossenen Stellung (FdCB) verschoben zu werden, wobei die motorisierte Antriebsvorrichtung (5) mindestens enthält:
-- einen elektromechanischen Stellantrieb (11), und
-- eine autonome elektrische Energieversorgungsvorrichtung (26), wobei die autonome elektrische Energieversorgungsvorrichtung (26) mindestens ein Solarpaneel (25) und mindestens eine Speichervorrichtung elektrischer Energie (24) enthält, wobei die autonome elektrische Energieversorgungsvorrichtung (26) konfiguriert, ist, den elektromechanischen Stellantrieb (11) mit elektrischer Energie zu versorgen,
wobei das Verfahren mittels eines mobilen Endgeräts (33) durchgeführt wird,
wobei das mobile Endgerät (33) mindestens enthält:
- ein Steuergerät (35),
- einen Fotoapparat (37), und
- eine Ausrichtungserkennungsvorrichtung (38),
wobei das Verfahren mindestens die folgenden Schritte enthält:
- (E100) Auswahl des elektromechanischen Stellantriebs (11) aus einer Liste von elektromechanischen Stellantrieben oder Eingabe einer Kennung des elektromechanischen Stellantriebs (11),
- (E120) Auswahl des Solarpaneels (25) aus einer Liste von Solarpaneelen oder Eingabe einer Kennung des Solarpaneels (25),
- (E140) Auswahl der Speichervorrichtung elektrischer Energie (24) aus einer Liste von Speichervorrichtungen elektrischer Energie oder Eingabe einer Kennung der Speichervorrichtung elektrischer Energie (24), und
- (E170) Bestimmung einer geographischen Lokalisierung der Anlage (100),
**dadurch gekennzeichnet, dass** das Verfahren außerdem mindestens die folgenden Schritte enthält:
- (E180) Bestimmung einer Solarmaske (M) gemäß einem Bestimmungsverfahren nach einem der Ansprüche 1 bis 8, und
- (E190) Kompatibilitätsprüfung der motorisierten Antriebsvorrichtung (5) abhängig von den Ergebnissen der Auswahl- oder Eingabeschritte (E100, E120, E140) des elektromechanischen Stellantriebs (11), des Solarpaneels (25) und der Speichervorrichtung elektrischer Energie (24), der Bestimmung (E170) der geographischen Lokalisierung der Anlage (100) und der Bestimmung (E180) der Solarmaske (M).

10. Mobiles Endgerät (33), das ein Steuergerät (35), einen Fotoapparat (37) und eine Ausrichtungserkennungsvorrichtung (38) enthält, **dadurch gekennzeichnet, dass** es konfiguriert ist, ein Verfahren zur Bestimmung einer Solarmaske (M) für eine Schließ-, Verdunkelungs- oder Sonnenschutzanlage (100) nach einem der Ansprüche 1 bis 8 und/oder ein Verfahren zur Kompatibilitätsprüfung einer motorisierten Antriebsvorrichtung (5) für eine Schließ-, Verdunkelungs- oder Sonnenschutzanlage (100) nach Anspruch 9 durchzuführen.

## Claims

1. A method for determining a solar mask (M) for a closure, shading or solar protection installation (100),
the method being carried out by means of a mobile terminal (33),
the mobile terminal (33) comprising at least:
- a controller (35),
- a photographic instrument (37), and
- an orientation detection device (38),
the method comprising at least the following steps:
- (E10) positioning the mobile terminal (33) at a predetermined location of a photovoltaic panel (25) of an autonomous electrical energy supply device (26), the autonomous electrical energy supply device (26) being configured to supply an electromechanical actuator (11) of a motorized drive device (5) with electrical energy, in an assembled configuration of the installation (100),
- after the step (E10) of positioning the mobile terminal (33), (E20) acquiring a single photograph (P) by means of the photographic instrument (37) of the mobile terminal (33), and
- (E30) determining an orientation of the photographic instrument (37) of the mobile terminal (33), during the step (E20) of acquiring the photograph (P), by means of the orientation detection device (38) and the controller (35) of the mobile terminal (33),
**characterized in that** the method furthermore comprises at least the following steps:
- (E40) extending at least one contour of the photograph (P) acquired, during the acquisition step (E20), along at least one direction, by means of the controller (35) of the mobile terminal (33), and
- (E60) superposing data of the photograph (Pe) extended, during the extension step (E40), with a solar path diagram (S), in a common reference frame (R, V), so as to determine a solar mask (M) at the predetermined location of the photovoltaic panel (25).

2. The method for determining a solar mask (M) for a closure, shading or solar protection installation (100) according to claim 1, **characterized in that** the step (E40) of extending at least one contour of the photograph (P) acquired, during the acquisition step (E20), is carried out along a plurality of directions, by means of the controller (35) of the mobile terminal (33).

3. The method for determining a solar mask (M) for a closure, shading or solar protection installation (100) according to claim 2, **characterized in that** the directions of extension of at least one contour of the photograph (P) acquired, during the acquisition step (E20), are the top, the left and the right of the photograph (P).

4. The method for determining a solar mask (M) for a closure, shading or solar protection installation (100) according to any one of claims 1 to 3, **characterized in that** the method comprises a step (E50) of projecting data of the photograph (Pe) extended, during the extension step (E40), into a projection reference frame (V), as a function of at least the orientation of the photographic instrument (37) of the mobile terminal (33) determined, during the determination step (E30), the projection step (E50) being carried out after the extension step (E40) and before the superposition step (E60), and **in that** the superposition step (E60) is carried out on the basis of data of the photograph (Pp) projected, during the projection step (E50), onto the solar path diagram (S).

5. The method for determining a solar mask (M) for a closure, shading or solar protection installation (100) according to claim 4, **characterized in that** the projection reference frame (V) of the photograph (Pe) extended, during the extension step (E40), is a spherical celestial arch reference frame.

6. The method for determining a solar mask (M) for a closure, shading or solar protection installation (100) according to claim 4 or according to claim 5, **characterized in that** the step (E50) of projecting data of the photograph (Pe) extended, during the extension step (E40), is also carried out as a function of a focal length of a lens of the photographic instrument (37) of the mobile terminal (33).

7. The method for determining a solar mask (M) for a closure, shading or solar protection installation (100) according to any one of claims 4 to 6, **characterized in that** the step (E50) of projecting data of the photograph (Pe) extended, during the extension step (E40), is also carried out as a function of dimensions of an image sensor of the photographic instrument (37) of the mobile terminal (33).

8. A method for determining a solar mask (M) for a closure, shading or solar protection installation (100) according to any one of claims 1 to 7, **characterized in that** the method furthermore comprises a step (E70) of determining at least one sky region (C) on the basis of the photograph (P) acquired, during the acquisition step (E20), by image processing, by means of the controller (35) of the mobile terminal (33).

9. A method for checking compatibility of a motorized drive device (5) for a closure, shading or solar protection installation (100),
the installation (100) comprising at least:
- a shading device (3), the shading device (3) comprising at least one screen (2),
- a motorized drive device (5), the screen (2) being configured to be moved between an open position (FdcH) and a closed position (FdcB) by means of the motorized drive device (5), the motorized drive device (5) comprising at least:
-- an electromechanical actuator (11), and
-- an autonomous electrical energy supply device (26), the autonomous electrical energy supply device (26) comprising at least one photovoltaic panel (25) and at least one electrical energy storage device (24), the autonomous electrical energy supply device (26) being configured to supply the electromechanical actuator (11) with electrical energy,
the method being carried out by means of a mobile terminal (33),
the mobile terminal (33) comprising at least:
- a controller (35),
- a photographic instrument (37), and
- an orientation detection device (38),
the method comprising at least the following steps:
- (E100) selecting the electromechanical actuator (11) from a list of electromechanical actuators or inputting an identifier of the electromechanical actuator (11),
- (E120) selecting the photovoltaic panel (25) from a list of photovoltaic panels or inputting an identifier of the photovoltaic panel (25),
- (E140) selecting the electrical energy storage device (24) from a list of electrical energy storage devices or inputting an identifier of the electrical energy storage device (24), and
- (E170) determining a geographical localization of the installation (100),
**characterized in that** the method furthermore comprises at least the following steps:
- (E180) determining a solar mask (M) by a determination method according to in any one of claims 1 to 8, and
- (E190) checking compatibility of the motorized drive device (5) as a function of the results of the steps (E100, E120, E140) of selecting or inputting the electromechanical actuator (11), the photovoltaic panel (25) and the electrical energy storage device (24), (E170) of determining the geographical localization of the installation (100) and (E180) of determining the solar mask (M).

10. A mobile terminal (33) comprising a controller (35), a photographic instrument (37) and an orientation detection device (38), wherein the mobile terminal is configured to carry out a method for determining a solar mask (M) for a closure, shading or solar protection installation (100) according to any one of claims 1 to 8 and/or a method for checking compatibility of a motorized drive device (5) for a closure, shading or solar protection installation (100) according to claim 9.
